(19) Europäisches Patentamt
European Patent Office
Office européen des brevets

(11) Veröffentlichungsnummer: **0 025 809**
**A1**

(12) # EUROPÄISCHE PATENTANMELDUNG

(21) Anmeldenummer: 79200644.7

(22) Anmeldetag: 05.11.79

(51) Int. Cl.[3]: C 09 K 3/34
G 02 F 1/137

(30) Priorität: 21.09.79 CH 8577/79

(43) Veröffentlichungstag der Anmeldung:
01.04.81 Patentblatt 81/13

(84) Benannte Vertragsstaaten:
AT BE CH DE FR GB IT LU NL SE

(71) Anmelder: BBC Brown, Boveri & Cie.
(Aktiengesellschaft)

CH-5401 Baden(CH)

(72) Erfinder: Osman, Maged A., Dr.
Lerchenrain 1
CH-8046 Zürich(CH)

(72) Erfinder: Révész, Laszlo, Dr.
Niederrohrdorferstrasse 2
CH-5442 Fislisbach(CH)

(72) Erfinder: Scheffer, Terry J., Dr.
Höhenstrasse 4
CH-8127 Forch/ZH(CH)

(72) Erfinder: Markert, Jürgen, Dr.
Im Guntengarten 32
CH-4107 Ettingen/BL(CH)

(54) **Flüssigkristallmischung.**

(57) Eine Flüssigkristallmischung für elektrooptische Anzeigen ohne polarisierende Deckscheiben besteht im wesentlichen aus einer nematischen Flüssigkristallmasse mit positiver oder negativer DK-Anisotropie als Wirt-Phase, einem optisch aktiven Zusatz zur cholesterischen Orientierung der Wirt-Phase und mindestens einem als Gast-Phase in der Wirt-Phase eingelagerten pleochroitischen Anthrachinon-Farbstoff; der Anthrachinon-Farbstoff ist ein solcher der Formel (1)

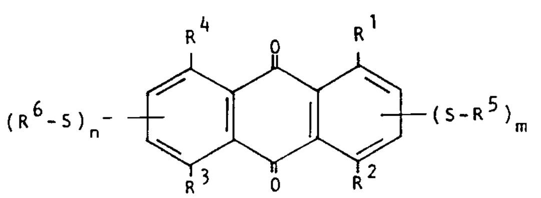
(1)

in welcher $R^1$, $R^2$, $R^3$ und $R^4$ Wasserstoffatome, Hydroxyl-, Amino- oder Nitrogruppen sind, m 1 oder 2 bedeutet, n Null, 1 oder 2 ist, $R^5$ und $R^6$ gleich oder verschieden sind und Wasserstoffatome oder Reste der Formeln (1a) oder (1b)

$$-[(CH_2)_a-X]_b-R^7 \quad (1a)$$

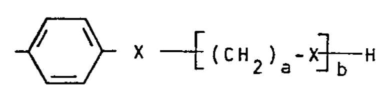
(1b)

bedeuten, worin a eine ganze Zahl von 1 bis 10, b Null oder eine ganze Zahl von 1 bis 6 und X das Sauerstoff- oder Schwefelatom, eine Einfachbindung oder die Oxycarbonylgruppe bedeuten und $R^7$ das Wasserstoffatom, eine Alkyl- oder Alkoxygruppe mit 1 bis 12 C-Atomen oder eine Phenyl- oder Phenoxygruppe ist.

EP 0 025 809 A1

# Flüssigkristallmischung

Die Erfindung betrifft Flüssigkristall-(FK)-Mischungen, die zur Verwendung für elektrooptische Anzeigezellen ohne polarisierende Deckscheiben, d. h. die weiter unten erläuterten, sogenannten "cholesterischen Guest/Host-FK-Anzeigen, auch CGH-FK-Anzeigen genannt, bestimmt sind.

Bei Anzeigezellen mit flüssigkristalliner dielektrischer Phase ist es bekannt, den elektrooptischen Effekt der Anzeige durch Einlagerung von dichroitischen oder pleochroitischen Farbstoffen als sogenannte "Gast-Phase" in einer flüssigkristallinen Matrix als sogenannte "Wirt-Phase" zu erzeugen (siehe Heilmeier, G.H. et al, Molec. Cryst. and Liq. Cryst. 8, 1969, 293-304). Die Farbstoffmoleküle der Gast-Phase werden hierbei von der einbettenden Wirt-Phase, in der sie gelöst bzw. verteilt sind, entsprechend dem anliegenden elektrischen Feld orientiert und zeigen wegen ihrer pleochroitischen Eigenschaften je nach Orientierung eine unterschiedliche Lichtabsorption. Im Unterschied zu normalen . Farbstoffen hängt die von pleochroitischen Farbstoffen absorbierte Lichtmenge von der Orientierung ihrer Moleküle zum elektrischen Feldvektor des einfallenden Lichtes ab. Durch Anlegen eines elektrischen Feldes auf die in einer Zelle als dünne Schicht verteilte FK-Mischung werden die nematischen Flüssigkristalle der Wirt-Phase und zusammen mit diesen die als Gast-Phase eingelagerten pleochroitischen Farbstoffe umorientiert, was zu einer Aenderung der Lichtabsorption führt. Die praktische Anwendung dieser in der Fachwelt als Guest/Host-Effekt bezeichneten Technik ist z. B. in der DE-OS 1 928 003 beschrieben. Als Beispiele von pleochroitischen bzw. dichroitischen Farbstoffen sind dort Indophenolblau, Indigoderivate, Azofarbstoffe und dergleichen beschrieben. Die dabei erzielbaren Kontraste und Helligkeiten sind jedoch relativ schwach, verglichen mit den bekannten FK-Anzeigen mit verdrillter nematischer Phase, und die Zellen benötigen eine Polarisationsdeckscheibe.

Gemäss einer neueren bekannten Entwicklung, wie sie z. B. in der DE-OS 2 410 557 beschrieben ist, kann auf polarisierende Deckscheiben verzichtet werden, wenn der aus nematischen Flüssigkristallen mit positiver DK-Anisotropie (als Wirt-Phase) und darin (als Gast-Phase) eingelagertem pleochroitischem Farbstoff zusammengesetzten dielektrischen Phase der Anzeige eine relativ geringe Menge, z. B. 1 bis 15 Gew.%, optisch aktives Material - auch als Dotierungsmittel bezeichnet - beigemischt wird, das der Flüssigkristallmasse eine verdrillte innere Struktur verleiht, die als - "chirale" oder "cholesterische" Orientierung bezeichnet wird und beispielsweise in der Arbeit von D. L. White und G. N. Taylor mit dem Titel "New Absorptive Mode Reflective Liquid Crystal Display Device" (J. Appl. Physics, Band 45, 1974, Seiten 4718-4723) beschrieben ist. Beispiele für Aufbau und Betrieb einer Anzeigezelle nach diesem Prinzip sindin den DE-OS 2 639 675 und 2 658 568 beschrieben.

In der Fachwelt werden FK-Anzeigezellen mit cholesterisch orientierter Wirt-Phase und darin als Gast-Phase eingebettetem Farbstoff als "cholesteric guest/host"-("CGH")- oder kurz als CGH-FK-Anzeigezellen bezeichnet; solche Anzeigezellen sind insbesondere deswegen vorteilhaft, weil sie sich für kommerzielle Fertigung und Verwendung ohne äussere Polarisatoren eignen und eine ausreichende Kontrastwirkung bei vereinfachtem Zellenaufbau ermöglichen.

Es hat sich gezeigt, dass die Auswahl geeigneter Farbstoffe für "cholesteric guest/host"-Zellen kritisch und sehr schwierig ist: Zunächst müssen die dichroitischen Verhältniswerte solcher Systeme mit Wirt-Phase und darin eingebettetem Farbstoff als Gast-Phase genügend gross sein, um der Anzeigezelle eine ausreichende Helligkeit und ein ausreichendes Kontrastverhältnis zu verleihen. Dabei ist das pleochroitische bzw. dichroitische Verhältnis des Systems als das Verhältnis $a_1/a_2$ derjenigen Extinktionswerte ("Absorbanz") des Farbstoffes definiert, die gemessen werden, wenn ($a_1$) die molekulare Ausrichtung oder Hauptachse der nematischen Wirt-Phase mit eingebettetem Farbstoff als Gast-Phase parallel zum E-Vektor des einfallenden Lichtes liegt und ($a_2$) diese molekulare Ausrichtung senkrecht zum E-Vektor des einfallenden Lichtes liegt. Die Werte von $a_1$ und $a_2$ können in an sich bekannter Weise fotometrisch gemessen werden, wie beispielsweise in der oben genannten Arbeit von White und Taylor beschrieben. Allgemein soll der Wert von $a_1/a_2$ mindestens etwa 5 betragen, um ausreichende Kontraste und Helligkeiten der Anzeige zu gewährleisten.

Ausser dem Extinktionsverhältnis $a_1/a_2$ sind aber zur Verwendung eines Farbstoffes in CGH-FK-Anzeigen noch andere Parameter wichtig: Ein Absorptionsmaximum des Farbstoffes muss im Bereich der sichtbaren Wellenlängen, d. h. zwischen 400 und 700 nm, liegen und der Farbstoff muss in der dotierten Wirt-Phase bis etwa 100°C praktisch beständig sein:

(a) gegen Wechselspannungen von bis zu 20 V, (b) gegen Licht bzw. Tageslicht-UV und (c) gegen die Komponenten der dotierten Wirt-Phase.

Zusammenfassungen der bisher für guest/host-Effektzellen allgemein bzw. für CGH-FK-Anzeigen speziell vorgeschlagenen Farbstoffe finden sich in den oben genannten Publikationen von Heilmeier et al und von White und Taylor sowie in einer Arbeit von Bloom und Hung, Molec. Cryst. and Liq. Cryst. Band 40, 1977, Seiten 213 ff, ferner in der DE-OS 2 627 215 und in einer Publikation von Constant et al, 7th International Liquid Crystal Conference 1978.

Die bisher für CGH-FK-Zellen vorgeschlagenen Farbstoffe erfüllen aber die oben genannten Anforderungen nicht in ausreichendem Masse. Insbesondere haben sich die in bezug auf den $a_1/a_2$-Wert und das Absorptionsmaximum an sich zweckmässigen und zur Verwendung in CGH-FK-Zellen meist vorgeschlagenen Azofarbstoffe als ungenügend beständig gegen Licht bzw. UV-Licht (zu geringe fotochemische Stabilität) und zum Teil auch als chemisch labil erwiesen. Andererseits ist die im Vergleich zu Azofarbstoffen allgemein höhere fotochemische und allgemein chemische Stabilität von Anthrachinon-Farbstoffen mit der Grundstruktur (10)

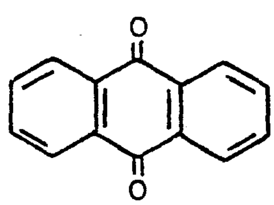

(10)

bekannt und tatsächlich wurden in der Literatur auch Vorschläge zur Verwendung von Anthrachinon-Farbstoffen für CGH-FK-Anzeigezellen gemacht. Die meisten der bisher vorgeschlagenen Anthrachinon-Farbstoffe haben aber einen zu

niedrigen $a_1/a_2$-Wert, d. h. einen zu kleinen dichroitischen Verhältniswert, um eine niedrige Betriebsspannung von 3 bis 4,5 V zu ermöglichen.

In der oben erwähnten Publikation von J. Constant wurden verschiedene substituierte Anthrachinone der Formeln (11) und (12)

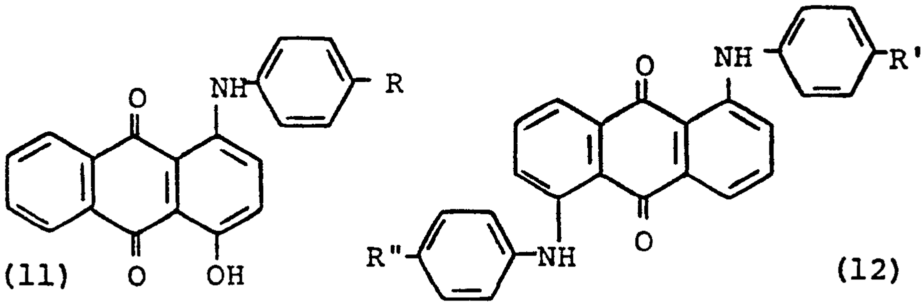

(11) (12)

untersucht, wobei R, R' und R" Alkyl- und Alkyloxygruppen mit bis zu 9 C-Atomen im Alkylteil oder Dimethylamino bedeuten. Die dichroitischen Verhältniswerte $a_1/a_2$ dieser Farbstoffe in einer handelsüblichen nematischen Phase (Produkt "Ro-TN-403" der Firma Hoffmann-La Roche, eine Mischung aus Biphenyl- und Pyrimidin-Verbindungen) liegen im Bereich von 5,6 bis 7,0, was die Eignung von Phenylaminogruppen zur hier interessierenden Modifikation von Anthrachinon-Farbstoffen zu bestätigen scheint. Die Phenylaminogruppe verringert aber auch die Löslichkeit der Farbstoffe in nematischen Wirt-Phase, was wiederum durch die Einführung längerer Alkyl- bzw. Alkoxyketten als R, R' bzw. R" kompensiert werden kann. Da solche Ketten flexibel sind, haben sie praktisch keinen Einfluss auf den Wert des dichroitischen Verhältnisses.

Die dichroitischen Verhältniswerte von substituierten Anthrachinonen der obigen Formeln (11) und (12) sind zu klein, um einer mit relativ niedrigen Spannungen von z. B. 3 bis 4,5 V betriebenen CGH-FK-Anzeigezelle einen für praktische

Zwecke, wie Armbanduhren, ausreichenden Anzeigekontrast zu verleihen.

Aufgabe der Erfindung ist es, eine für CGH-FK-Anzeigezellen bestimmte FK-Mischung anzugeben, welche die hierfür üblichen Komponenten und als pleochroitischen Farbstoff einen solchen vom Typ der modifizierten Anthrachinon-Farbstoffe enthält, der aber derart modifiziert ist, dass er der Anzeigezelle die für Anzeigezellen mit verdrillter nematischer Phase typische Helligkeit und hohen Anzeigekontraste auch bei Betrieb der CGH-FK-Anzeige mit verhältnismässig niedrigen Spannungen verleiht.

Es wurde gefunden, dass diese Aufgabe durch Verwendung von bestimmten thio-substituierten Anthrachinon-Farbstoffen der weiter unten angegebenen Formel (1) gelöst werden kann, die ein Absorptionsmaximum im Bereich von 400 bis 700 nm aufweisen, gegen Tageslicht-UV, Temperaturen bis etwa 100°C sowie gegen Wechselspannungen bis etwa 20 V stabil und mit den Komponenten der FK-Mischung kompatibel in dem Sinne sind, dass sie sich in der FK-Mischung in praktisch brauchbaren Konzentrationen, z. B. mindestens zu etwa 0,5 % des Gewichtes der FK-Mischung, lösen lassen und die Komponenten der Mischung bzw. die Mischung selbst nicht nachteilig beeinflussen.

Gegenstand der Erfindung ist eine für CGH-FK-Anzeigen bestimmte Flüssigkristallmischung, die im wesentlichen, z. B. aus 80 bis 100 Gew.%, besteht aus: (a) nematischer FK-Masse als Wirt-Phase, (b) optisch aktivem Zusatz zur cholesterischen Orientierung der Wirt-Phase, z. B. in einem Anteil von 0,5 bis 15 %, bezogen auf das Gewicht der Mischung, und (c) mindestens einem in der Mischung eingelagerten und vorzugsweise darin gelösten pleochroitischen Anthrachinon-Farbstoff, gegebenenfalls in Mischung mit anderen praktisch UV-stabilen Farbstoffen, vorzugsweise in Anteilen von 0,1 bis 5 Gew.% des Gewichtes der Mischung. Die nematische FK-Masse oder Komponente (a) kann eine positive oder negative DK-Anisotropie (im folgenden auch als DKA bezeichnet) besitzen.

Die erfindungsgemässe FK-Mischung ist dadurch gekennzeichnet, dass der Anthrachinon-Farbstoff mindestens zum Teil ein solcher der Formel (1) ist

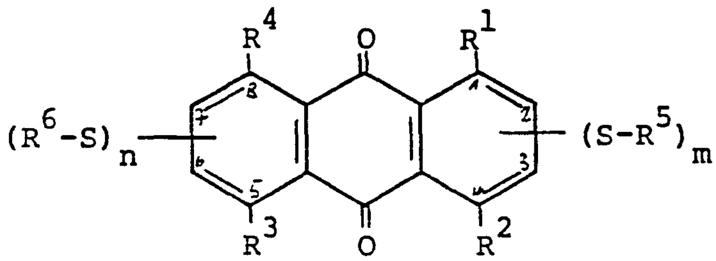

(1)

in welcher $R^1$, $R^2$, $R^3$ und $R^4$ Wasserstoffatome, Hydroxyl-, Amino- oder Nitrogruppen sind, m 1 oder 2 bedeutet, n Null, 1 oder 2 ist, $R^5$ und $R^6$ gleich oder verschieden sind und Wasserstoffatome oder Reste der Formeln (1a) oder (1b)

$$-[(CH_2)_a-X]_b-R^7 \qquad (1a)$$

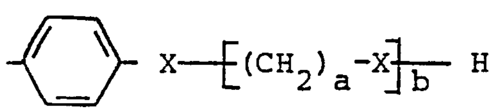

(1b)

bedeuten, in welchen a eine ganze Zahl von 1 bis 10, b Null oder eine ganze Zahl von 1 bis 6 und X das Sauerstoff- oder Schwefelatom, eine Einfachbindung oder eine Oxycarbonylgruppe (-OC(O)-) darstellen, und $R^7$ das Wasserstoffatom, eine Alkylgruppe mit 1 bis 12 C-Atomen, eine Alkoxygruppe mit 1 bis 12 C-Atomen oder eine Phenyl- oder Phenoxygruppe ist. Die Phenyl- bzw. Phenoxygruppen können Alkylsubstituenten mit 1 bis 6 C-Atomen tragen.

Gemäss einer bevorzugten Ausführungsform bedeutet m in Formel (1) Eins und n in Formel (1) Null. Ebenfalls bevorzugt werden in der Regel Farbstoffe der Formel (1), in welchen mindestens eine der Gruppen $R^1$ bis $R^4$ die Aminogruppe und mindestens eine andere dieser Gruppen die Hydroxylgruppe ist. Insbesondere werden meist Farbstoffe der Formel (1), in welchen $R^1$ die Aminogruppe und $R^2$ die Hydroxylgruppe bedeutet, bevorzugt.

Eine bevorzugte spezielle Gruppe von Farbstoffen (1) entspricht der Formel (2)

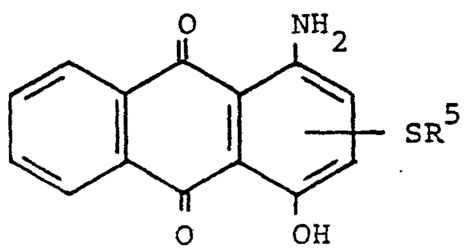

(2)

in der $R^5$ die oben angegebene Bedeutung hat.

Eine weitere, ebenfalls bevorzugte spezielle Gruppe von Farbstoffen (1) entspricht der Formel (3)

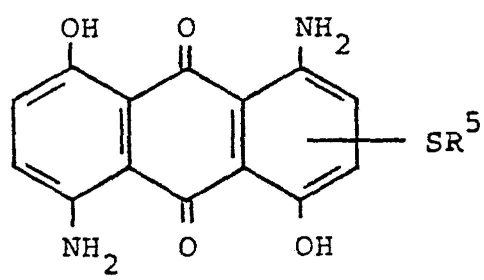

(3)

in der $R^5$ die oben angegebene Bedeutung hat. Verbindungen der Formeln (2) und (3), bei welchen $SR^5$ in 3-Stellung steht, stellen eine bevorzugte Gruppe dar.

Allgemein werden häufig solche Farbstoffe der obigen Formeln (1), (2) und (3) bevorzugt, bei welchen das oder die direkt am Anthrachinongerüst hängende(n) Schwefelatom(e) einen gegebenenfalls durch 1 bis 3 Sauerstoff- oder/und Schwefelatome unterbrochenen $C_1$-$C_{10}$-Alkylrest, insbesondere einen solchen mit endständiger Hydroxyl- oder Thiolgruppe, oder einen Phenylenrest trägt, welch letzterer, vorzugsweise in p-Stellung zum Schwefelatom, seinerseits einen gegebenenfalls durch 1 bis 3 Sauerstoff- oder/und Schwefelatome unterbrochenen $C_1$-$C_{10}$-Alkylrest tragen kann, der wie oben erwähnt vorzugsweise eine endständige Hydroxyl- oder Thiolgruppe trägt.

Derartige Gruppen $R^5$ und gegebenenfalls $R^6$ ermöglichen es, den für die bestimmungsgemässe Verwendung der Farbstoffe in CGH-FK-Mischungen bedeutsamen dichroitischen Verhältniswert $a_1/a_2$ auf Werte von 7 oder mehr zu erhöhen. Beispielsweise zeigen Farbstoffe der Formeln (2) und (3), in denen $R^5$ einen 2-Hydroxyethylrest ($-CH_2CH_2OH$) oder einen Rest der Formel $-(CH_2)_2O(CH_2)_2S(CH_2)_2OH$ darstellt, bei Messung in einer technisch erhältlichen nematischen Phase (z. B. Produkt RoTN-403) dichroitische Verhältniswerte $a_1/a_2$ von 7,5 bis 8,6 und liegen damit wesentlich über den entsprechenden Werten der bekannten Anthrachinon-Farbstoffe der Formeln (11) und (12).

Farbstoffe der Formel (1) sind zum Teil als solche im Zusammenhang mit der Textilfärbung bekannt und können jedenfalls nach an sich bekannten Verfahren unter Ersatz der Halogengruppen bekannter Anthrachinonstrukturen, wie sie z. B. in Friedländer, Band 24, 1941, Seiten 991 ff, bzw. der US-PS 3'018'154 beschrieben sind, unter Ersatz der Sulfonsäuregruppen bekannter Anthrachinonverbindungen, wie sie

z. B. in der US-PS 2'640'059 oder der JP-AS 7'007'037 beschrieben sind, durch Reste $-S-R^5$ bzw. $-S-R^6$ oder durch direkte Einführung dieser Reste in das entsprechende Anthrachinongerüst erhalten werden, siehe z. B. DE-OS 2'606'513, US-PS 3'819'665 und DE-AS 1'190'123.

Die Farbstoffe (1) können in an sich bekannter Weise mit den oben genannten weiteren Komponenten an sich bekannter Art zu erfindungsgemässen CGH-FK-Mischungen verarbeitet werden, z. B. durch Vermischen und gegebenenfalls Erwärmen der Komponenten (a) und (b) mit dem Farbstoff; die FK-Mischungen können dann in entsprechende Anzeigezellen, z. B. mit der in der DE-OS 2'639'675 beschriebenen Struktur, eingefüllt werden.

Geeignete Komponenten (a) und (b) sind, wie erwähnt, bekannt bzw. als technische Produkte erhältlich. Als Beispiele für (a) mit positiver DKA sind ausser dem oben genannten Produkt "Ro-TN-403" die Produkte "Ro-TN-103", "Merck ZLI 1221" und Merck ZLI 1291" zu nennen. Beispiele für (a) mit negativer DKA sind "Merck Licristal 914" und "Chisso Lixon En-18".

Weitere Beispiele für geeignete Komponenten (a) und (b) finden sich in der oben genannten Publikation von White und Taylor sowie in den DE-OS 2'410'557 und 2'658'568. Beispiele für als technische Produkte erhältliche Komponenten (b) sind die Substanz "CB 15", eine Verbindung der Formel

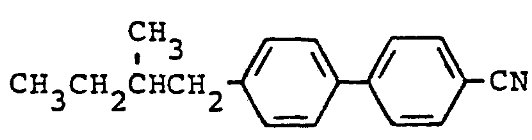

der Firma British Drug House und Cholesterinbenzoesäureester.

Beispiele 1-18

CGH-FK-Mischungen wurden mit Anthrachinon-Farbstoffen der Formeln (21), (31) und (32) hergestellt

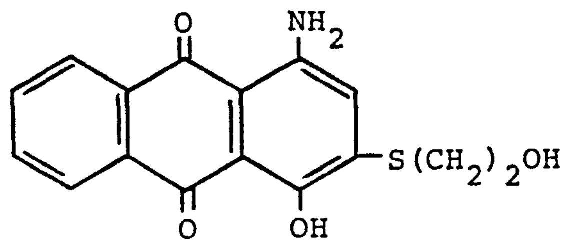

(21)

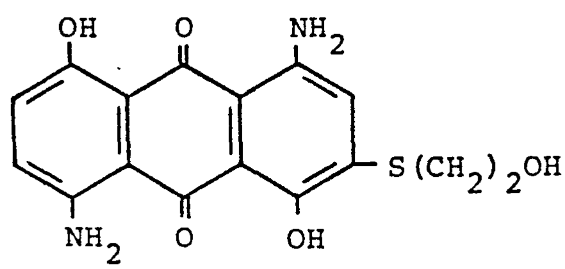

(31)

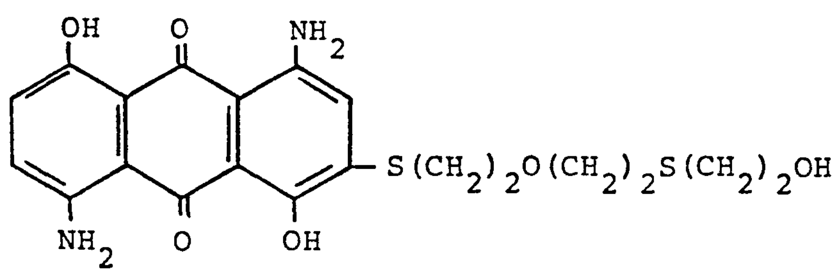

(32)

Die dichroitischen Verhältniswerte $a_1/a_2$ dieser Farbstoffe, gemessen in Ro-TN-403, waren wie folgt:

| Formel | $a_1/a_2$ |
|---|---|
| (21) | 7,5 |
| (31) | 8,6 |
| (32) | 8,5 |

Diese Farbstoffe zeigen Absorptionsmaxima im Bereich von 400 bis 700 nm und sind gegen Tageslicht-UV bei Temperaturen bis 100 °C unter einer Wechselspannung von bis zu 20 V stabil sowie mit den Komponenten (a) und (b) kompatibel.

Zusammensetzung und Klärpunkte ($T_c$) der Mischungen sind in der folgenden Tabelle wiedergegeben.

TABELLE I

| Beisp. Nr. | (a) nematische Phase (Gew.%) | | (b) CB 15 (Gew.%) | (c) Farbstoff (Formel Nr. und Gew.%) | | $T_c$ (°C) |
|---|---|---|---|---|---|---|
| 1 | Ro-TN-403 | 96,5 | 3 | (21) | 0,5 | 79,0 |
| 2 | " | 95,5 | 4 | " | 0,5 | 78,0 |
| 3 | " | 94,5 | 5 | " | 0,5 | 77,0 |
| 4 | " | 96,0 | 3 | " | 1,0 | 79,3 |
| 5 | " | 95,0 | 4 | " | 1,0 | 78,3 |
| 6 | " | 94,0 | 5 | " | 1,0 | 77,3 |
| 7 | " | 96,5 | 3 | (31) | 0,5 | 78,8 |
| 8 | " | 95,5 | 4 | " | 0,5 | 77,8 |
| 9 | " | 94,5 | 5 | " | 0,5 | 76,7 |
| 10 | " | 96,0 | 3 | " | 1,0 | 78,5 |
| 11 | " | 95,0 | 4 | " | 1,0 | 77,5 |
| 12 | " | 94,0 | 5 | " | 1,0 | 76,5 |
| 13 | " | 96,5 | 3 | (32) | 0,5 | 78,7 |
| 14 | " | 95,5 | 4 | " | 0,5 | 77,6 |
| 15 | " | 94,5 | 5 | " | 0,5 | 76,6 |
| 16 | " | 96 | 3 | " | 1,0 | 78,4 |
| 17 | " | 95 | 4 | " | 1,0 | 77,3 |
| 18 | " | 94 | 5 | " | 1,0 | 76,3 |

Es versteht sich, dass die obigen Beispielsangaben die Erfindung nicht beschränken. So kann eine erfindungsgemässe FK-Mischung auch zwei oder mehr pleochroitische Farbstoffe der Formel (1) oder/und eine Mischung von Farbstoff(en) der Formel (1) mit mindestens einem nicht-pleochroitischen Farbstoff enthalten, welcher die oben genannten Löslichkeits- und Stabilitätsbedingungen erfüllt. Derartige Farbstoffe sind bekannt; ihre Verwendung als zusätzliche Komponente erfindungsgemässer FK-Mischungen ermöglicht mehrfarbige Anzeigedarstellungen. Wenn man in einer CGH-Zelle beispielsweise eine erfindungsgemässe FK-Mischung mit einer Wirt-Phase mit positiver DKA verwendet, erscheint der angesteuerte Bereich der Anzeige im wesentlichen farblos, während der nicht angesteuerte Bereich die charakteristische Farbe des Farbstoffes (1) hat; enthält diese FK-Mischung aber zusätzlich einen nicht-pleochroitischen Farbstoff, so zeigt in diesem Fall der angesteuerte Bereich die Farbe des nicht-pleochoritischen Farbstoffes, während der nicht angesteuerte Bereich die Mischfarbe des pleochroitischen und des nicht-pleochroitischen Farbstoffes hat.

Bei analoger Verwendung einer erfindungsgemässen FK-Mischung mit einer Wirt-Phase mit negativer DKA hat der angesteuerte Bereich die charakteristische Farbe des Farbstoffes (1), während der nicht angesteuerte Bereich im wesentlichen farblos erscheint; wird hier ein zusätzlicher nicht-pleochroitischer Farbstoff verwendet, so zeigt der angesteuerte Bereich die Mischfarbe des pleochroitischen und des nicht-pleochroitischen Farbstoffes, während der nicht angesteuerte Bereich die Farbe des nicht-pleochroitischen Farbstoffes aufweist.

BAD ORIGINAL

Für derartige Zwecke kann der nicht-pleochroitische Farbstoffanteil - der gegebenenfalls eine Mischung nicht-pleochroitischer Farbstoffe sein kann - einer erfindungsgemässen CGH-FK-Mischung zweckmässig im Bereich von 0,1 bis 5 %, bezogen auf das Gewicht der CGH-FK-Mischung, liegen.

## Patentansprüche

1. Für elektrooptische Anzeigen ohne polarisierende Deckscheiben bestimmte Flüssigkristallmischung, die im wesentlichen besteht aus einer nematischen Flüssigkristallmasse mit positiver oder negativer DK-Anisotropie als Wirt-Phase, einem optisch aktiven Zusatz zur cholesterischen Orientierung der Wirt-Phase und mindestens einem als Gast-Phase in der Wirt-Phase eingelagerten pleochroitischen Anthrachinon-Farbstoff, dadurch gekennzeichnet, dass der Anthrachinon-Farbstoff ein solcher der Formel (1) ist

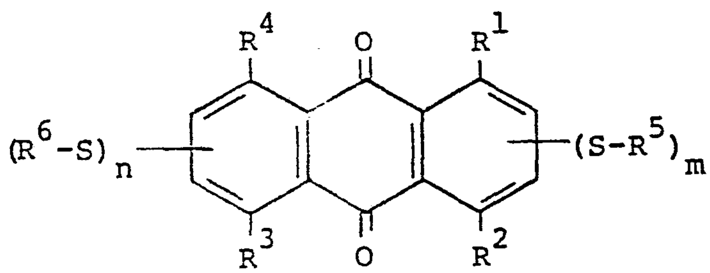

(1)

in welcher $R^1$, $R^2$, $R^3$ und $R^4$ Wasserstoffatome, Hydroxyl-, Amino- oder Nitrogruppen sind, m 1 oder 2 bedeutet, n Null, 1 oder 2 ist, $R^5$ und $R^6$ gleich oder verschieden sind und Wasserstoffatome oder Reste der Formeln (1a) oder (1b)

$$-[(CH_2)_a-X]_b\ R^7 \qquad (1a)$$

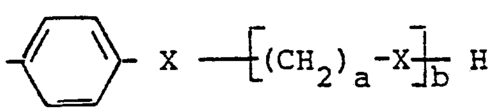

(1b)

bedeuten, worin a eine ganze Zahl von 1 bis 10, b Null oder eine ganze Zahl von 1 bis 6 und X das Sauerstoff- oder Schwefelatom, eine Einfachbindung oder die Oxycarbonylgruppe darstellen und $R^7$ das Wasserstoffatom, eine Alkyl- oder Alkoxygruppe mit 1 bis 12 C-Atomen oder eine Phenyl- oder Phenoxygruppe ist.

BAD ORIGINAL

2. FK-Mischung nach Patentanspruch 1, dadurch gekennzeichnet, dass in der Formel (1) m = 1 und n = Null.

3. FK-Mischung nach Patentanspruch 1 oder 2, dadurch gekennzeichnet, dass in der Formel (1) mindestens eine der Gruppen $R^1$ bis $R^4$ die Aminogruppe ist, wobei vorzugsweise mindestens $R^1$ eine Aminogruppe ist.

4. FK-Mischung nach einem der Patentansprüche 1-3, dadurch gekennzeichnet, dass in der Formel (1) mindestens eine der Gruppen $R^1$ bis $R^4$ die Hydroxylgruppe ist, wobei vorzugsweise mindestens $R^2$ die Hydroxylgruppe ist.

5. FK-Mischung nach Patentanspruch 1, dadurch gekennzeichnet, dass der Anthrachinon-Farbstoff ein solcher der Formel (2) ist

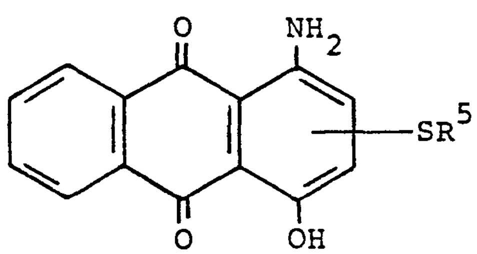

(2)

in der $R^5$ die in Patentanspruch 1 angegebene Bedeutung hat.

6. FK-Mischung nach Patentanspruch 1, dadurch gekennzeichnet, dass der Anthrachinon-Farbstoff ein solcher der Formel (3) ist

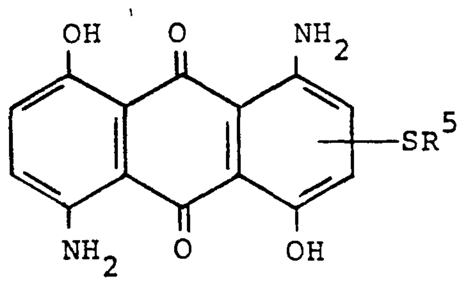

(3)

in der $R^5$ die in Patentanspruch 1 angegebene Bedeutung hat.

7. FK-Mischung nach Patentanspruch 5 oder 6, dadurch gekennzeichnet, dass $R^5$ einen gegebenenfalls durch 1 bis 3 Sauerstoff- oder/und Schwefelatome unterbrochenen ω-Hydroxyalkylrest oder ω-Mercaptoalkylrest bedeutet.

8. FK-Mischung nach Patentanspruch 5 oder 6, dadurch gekennzeichnet, dass $R^5$ eine Phenylengruppe bedeutet, deren zum Schwefelatom paraständiges C-Atom direkt oder über ein Sauerstoff- oder Schwefelatom mit einem ω-Hydroxy- oder ω-Mercaptoalkylrest verbunden ist, dessen Alkylteil 1 bis 10 C-Atome enthält und gegebenenfalls durch 1 bis 3 Sauerstoff- oder Schwefelatome unterbrochen ist.

9. FK-Mischung nach Patentanspruch 5 oder 6, dadurch gekennzeichnet, dass $R^5$ in 3-Stellung steht und z. B. einen Hydroxyethylrest der Formel $-CH_2-CH_2-OH$ darstellt.

10. FK-Mischung nach Patentanspruch 5 oder 6, dadurch gekennzeichnet, dass $R^5$ in 3-Stellung steht und z. B. einen Rest der Formel $-(CH_2)_2O(CH_2)_2S(CH_2)_2OH$ darstellt.

11. FK-Mischung nach einem der Patentansprüche 1-10, dadurch gekennzeichnet, dass die Wirt-Phase 80 bis 98,5 Gew.%, der optisch aktive Zusatz 0,5 bis 15 Gew.% und der Anthrachinon-Farbstoff 0,1 bis 5 Gew.% der Mischung ausmacht und dass die Löslichkeit des Anthrachinon-Farbstoffes in der Wirt-Phase bei Normaltemperatur mindestens 0,5 Gew.% beträgt.

BAD ORIGINAL

12. FK-Mischung nach einem der Patentansprüche 1-11, dadurch gekennzeichnet, dass sie zusätzlich mindestens einen nicht-pleochroitischen Farbstoff, z. B. in einem Anteil von 0,1 bis 5 Gew.% der Mischung, enthält.

0025809

Europäisches Patentamt

# EUROPÄISCHER RECHERCHENBERICHT

Nummer der Anmeldung

EP 79 20 0644

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | EP - A - 0 002 104 (B.D.H. CHEM)<br>* Seite 4, Zeilen 21-26; Seite 5, Zeilen 1-27; Tabelle 1-7; Ansprüche 1-7 *<br>-- | 1 |
| A | US - A - 3 975 285 (Y. OHNISHI)<br>* Tabelle 1-3; Ansprüche 1-11 *<br>-- | 1 |
| A | FR - A - 2 243 980 (MATSUSHITA)<br>* Seite 1, Zeilen 4-14; Seite 3, Zeilen 28-38; Seite 4, Zeilen 1-30; Seite 5, Zeilen 25-30; Seite 6, Zeilen 1-15; Beispiele 1-5; Ansprüche 1-10 *<br>& US - A - 3 960 751<br>-- | 1 |
| E | GB - A - 2 019 026 (SECRETARY OF STATE FOR DEFENCE)<br>* Ansprüche 1,9-11 *<br>-- | 1 |
| E | FR - A - 2 444 701 (B.B.C.)<br>* Seite 4, Zeilen 9-21; Seite 6, Zeilen 1-7; Ansprüche 1-12 *<br>& DE - A - 2 902 177<br>& GB - A - 2 045 274<br>-- | 1 |
| E | FR - A - 2 244 702 (B.B.C.)<br>* Seite 4, Zeilen 9-22; Seite 6, Zeilen 1-17; Ansprüche 1-10 *<br>./. | 1 |

**KLASSIFIKATION DER ANMELDUNG (Int. Cl.³)**

C 09 K 3/34
G 02 F 1/137

**RECHERCHIERTE SACHGEBIETE (Int. Cl.³)**

C 09 K 3/34
G 02 F 1/137

**KATEGORIE DER GENANNTEN DOKUMENTE**

- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

X Der vorliegende Recherchenbericht wurde für alle Patentansprüche erstellt

| Recherchenort | Abschlußdatum der Recherche | Prüfer |
|---|---|---|
| Den Haag | 17-11-1980 | BOULON |

EPA form 1503.1 06.78

Europäisches Patentamt

# EUROPÄISCHER RECHERCHENBERICHT

Nummer der Anmeldung
EP 79 20 0644


| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | & DE - A - 2 903 095<br>& GB - A - 2 037 803<br>---- | | |
| | | | RECHERCHIERTE SACHGEBIETE (Int. Cl.³) |